# EUROPEAN PATENT SPECIFICATION

(11) **EP 3 203 428 B1**
(45) Date of publication and mention of the grant of the patent: **23.08.2023**
(21) Application number: 16154377.2
(22) Date of filing: 05.02.2016
(51) Int. Cl.: G06Q 20/32, G06Q 20/38

(54) **TRANSACTION PROCESSING SYSTEM AND PROCESS**
TRANSAKTIONSVERARBEITUNGSSYSTEM UND -VERFAHREN
PROCÉDÉ ET SYSTÈME DE TRAITEMENT DE TRANSACTION

(43) Date of publication of application: 09.08.2017
(73) Proprietor: Stauffer, Eduard, 09800 Monaco (MC)
(72) Inventor: BRADEN, Jude, 07320 Santa Maria del Cami (Baleares) (ES)
(74) Representative: Lehmann Novo, Maria Isabel

(56) References cited:
- WO-A1-00/35135
- WO-A2-2006/053191
- US-A1- 2008 110 982
- US-A1- 2011 202 415

## Description

The invention is related to a transaction processing system for carrying out a verified/validated communications transaction, in particular a financial transaction or a processing element related to a financial transaction, and to a corresponding process.

A global problem exists whereby mobile phones and other mobile devices, in particular those equipped with Near Field Communications (NFC) capabilities, do not possess sufficient security functionality and safeguards to definitively verify the identity of the device owner in the course of a transaction processing event.

A usual approach to resolve this problem is that the user (alleged device owner) has to input a verification data set, e.g. a PIN or fingerprint or voice sample or similar, and that such input verification data set is compared to a stored corresponding data set, for example on the mobile device or a Cloud based database, for releasing the transaction in response to a positive result of the comparison. However, such procedures are cumbersome for the user and susceptible to malicious exploitation.

One of the main weaknesses of existing systems is their reliance on primarily "static" data codes for identification of the device owner. For example, chip-and-pin method is widely used globally for security of credit card transactions and online banking services require the entry of the secret code of the account owner in order to process a financial transaction. In these instances, the security codes chosen by the customers, especially those who use mobile devices to undertake transactions, ultimately are stored as static unchanging data on their mobile or other device or in a supposedly secure code database in a Cloud or other location. The static nature of these security codes presents a system security vulnerability that is all too often exploited by criminals to raid bank accounts or by processing other transactions with stolen personal data, including the secret security codes of the customer.

The development of Near Field Communications (NFC) for mobile devices and enterprise processing presents criminals with an even greater field of opportunity where the requirement to physically steal a device is not necessary in order to extract personal data that could be used for criminal and fraudulent purposes.

NFC enabled mobile devices and the systems and methodologies used for transaction processing, including identity verification, are changing significantly now. For example, many international organizations such as Google (Google Pay system- January 2015) announced that Host Based Card Emulation (HCE) was being introduced for NFC enabled devices. This means that the traditional Secure Element (SE) of a mobile device, a secure area on a mobile phone where encrypted security data is stored as part of a transaction processing system, would not be used further and would be replaced by a Cloud-based service which would utilize supposedly secure mobile applications for transaction processing events. In addition, even those systems that utilize the relatively new "tokenisation" methodology are still at risk as the "tokens" are pre-loaded on the mobile device in advance of a transaction processing event being undertaken, and therefore the "tokens" can in fact be considered to be "static data" elements when loaded.

Regardless of these developments, both HCE and SE based identity verification methods are not sufficiently robust and will continue to be exploited by criminals for financial or other gain. As long as companies rely on traditional secret code type security such as Personal Identity Numbers (PIN), or even fingerprint and/or facial recognition, which by default must be static data and unchanging until a client intentionally changes their security code, the highest level of identity verification in the transaction processing cycle can not be attained.

It is therefore an object of the invention, to provide a system and process for securely and conveniently initiating communications transactions, including transactions of a financial nature. More specifically, it is an object of the concept to provide transaction processing organizations, particularly financial entities, or those who rely on identity verification for the security of their business transactions, with a means to significantly enhance existing identity verification methodologies without the need to majorly alter currently used identity verification systems.

These and other objects are solved with a system according to claim 1 and a process according to claim 10 Advantageous embodiments of the invention are subject of the dependent claims.

Relevant prior art to the present application is: document WO0035135 which describes an authentication process involving an image of a fingerprint, which is segmented and varying parts are sent from the user device to the entity which has to verify the authenticity (see e.g. abstract). In document US2008110982 (see abstract, claim 1 and paragraphs 42 to 45) a similar type of transaction protocol has been described making use of a dynamically generated key. In document WO2006053191 (see abstract) a dynamic code is used instead of a PIN.

The proposed system and process is determined to prevent the use of an NFC enabled mobile device from carrying out a communications transaction, including transactions of a financial nature, unless the identity of the device owner is verified and validated. This will be accomplished without the necessity of using a Personal Identity Number (PIN) or other manual input of owner identity information. In effect, the system will greatly reduce the need to rely on the mobile device owner for implementing and securely maintaining the first-line of security on the mobile NFC device e.g. PIN or other personal security code. The system is designed therefore to be a substantially input-free process after the required identity information is initially embedded on the NFC enabled mobile device, either on the secure element of the mobile device or at the host transaction processing centre whether cloud-based or other.

The present invention will solve the vulnerability associated with static PIN or other security codes, including digitised fingerprint or facial recognition, by employing a methodology where individual security codes used to verify the identity of a client and thereby authorize a transaction, will in effect, be in a state of flux, constantly and automatically changing based on client risk profile. The same "state of flux" principal can also be applied to digital fingerprint and/or digital facial recognition data that could be used as part of process validation.

The system will also dispense with the requirement of the device owner to select and remember security identity codes or the requirement to enter such codes during a transaction process event. For example, when an NFC enabled mobile device is loaded with credit card details of the owner at a local bank office, the identity of the device owner is verified by the bank officer and an electronic image of the device owner is given on-site through the owners own mobile device, to be processed by a unique encryption methodology herein referred to as Dynamic Rotational Encrypted Modulation (D-REM). When the system segments and encrypts certain portions of the image provided, the encrypted segments are automatically sent back to the NFC mobile device by D-REM and from that point forward, those encrypted elements of the owners image will be constantly and automatically changed at certain predetermined times.

In effect, the identity security "key" or code will not be static and this will virtually eliminate the window of opportunity for criminals to extract and use identity codes. Each time D-REM updates the encrypted elements of the owner image, it first checks that the last transmitted encryption string is valid before replacing it with newly encrypted segments.

The core components of the proposed system are:
- an NFC enabled mobile user equipment for sending a transaction request and a first verification data set comprised of dynamically modulated encrypted user data;
- an NFC shop equipment which can communicate with the mobile user equipment, for receiving the transaction request and first verification data set and forwarding same for processing;
- an encryption modulation processing server for providing dynamically modulated encrypted user data as the first and second verification data set; and
- a transaction processing server and database which are connectable to the shop (or any type of enterprise) equipment and to the encryption modulation processor, for receiving the transaction request and first and second verification data sets and processing same to verify/validate and initiate or block the requested transaction, respectively.

In a broader understanding, the system also comprises a user data input device which is connectable to the encryption modulation processor, for inputting an initial set of user data of the user equipment and a validation/confirmation stamp into the system and for forwarding the initial user data set to the encryption modulation processing server. In an embodiment of the invention, the first and second verification data sets comprise encrypted image data of the user, in particular of the users face, but alternatively could also be a fingerprint or a facial image and fingerprint in combination.

In a further embodiment, the encryption modulation processing server is adapted for forming an initial encrypted set of user data from the initial set of user data, to be or for forming the first and second verification data sets, by way of a random segmentation or partitioning algorithm.

Insofar, the proposed system and process encompass a unique method that ensures a pre-determined and seamless update of an image, or segment of an image, of the mobile device owner (e.g. An actual image of the device owner), where that image is initially verified in person by a service or credit provider to the mobile device owner, and where thereafter, the verified image, or segment(s) of the image becomes the automatic validation key for performing a mobile transaction, but without the necessity of the mobile NFC enabled device owners having to input any identity or other verification information to facilitate the transaction.

At the core of the system and process is a unique encryption methodology herein referred to as Dynamic Rotational Encrypted Modulation (D-REM). The system uses, in its presently preferred implementation, the image of the device owner, and/or the fingerprint of the device owner, provided to and verified by the service provider in person. It then determines the pixel density of the image and applies a predetermined or random segmentation process that electronically records a selection of pixels that can be continuously modified and updated at specified time intervals and this "recorded or marked" segment of the image is resent to the mobile device. Alternatively, the base image of the device owner is partitioned into a predetermined number of image grids (e.g. 64 grid) which are then individually selected in varying numbers (e.g. 5 or 10 grids) and then encrypted and updated to the NFC enabled device at predetermined times.

In effect, this means that the "secure identification elements" are being changed automatically at certain time intervals and therefore a typically static non-changing permanent identification element is not continuously held on the mobile device thereby preventing malicious exploitation.

When the NFC enabled mobile device is being used to purchase a product at a retail outlet, the mobile device is held near to a processing scanner (herein referred to as NFC shop equipment) which will read the D-REM encrypted image on the NFC mobile device and compares it with the encrypted image at the transaction processing centre. At this point, only the "marked" encrypted segments of the base image are compared for identity verification thereby speeding up the identity verification process. The Dynamic Rotational Modulation feature ensures that newly encrypted elements of the base image are continuously updated, at specific intervals, initiated from the transaction processing centre to the NFC enabled mobile device, thereby ensuring that new encrypted segments of the base image are present at all times for identity verification of the NFC mobile device owner.

As the system in its entirety operates in a state of predetermined continuous rotational modulation of the encrypted segments of the base image, the NFC enabled mobile device has the highest level of identity security and identify verification. In the event of a mobile NFC enabled device being stolen and the original base image was somehow altered or replaced by another image, that new image would never "match" the associated image and image segmentation markers on the transaction processing system due to the rotational modulation process. In addition, the action of replacing the original image would automatically erase the last encrypted image segments sent to the mobile device therefore any subsequent "updates" sent to the device would be signalled as invalid.

In a further embodiment, the NFC shop equipment comprises a display device for displaying data related to the first verification data set, in particular for displaying an image of the user. In other words, the image of the mobile device owner can be displayed on a "mini-screen" at the payment point in the retail store, possibly only visible to the check-out staff, thereby allowing visual confirmation of identity. Alternatively, it would also be possible to display the NFC device owner image on the till (cash register) machine rather than on another display device.

In a further embodiment, the user data input device is an NFC enabled device which can communicate with the mobile user equipment, for receiving user data, in particular an image of the user, provided at the mobile user equipment.

In further embodiments, the mobile user equipment comprises a secure element on which the first verification data set is stored, or the mobile user equipment comprises a means for obtaining the first verification data set from a Cloud based server.

In a further embodiment, part of the transaction processing server is implemented within the NFC shop equipment, for processing the first and second verification data sets and outputting a release or block signal in the shop equipment.

The proposed system and process can, in principle, also be utilized for online transaction processing when a mobile NFC enabled device is being used for making product purchases or any other business where identity verification is required.

To a far extent corresponding to the core features of the above-referenced system, the proposed process comprises:
sending a transaction request and a first verification data set comprised of dynamically modulated encrypted user data from an NFC enabled mobile user equipment to an NFC shop equipment; receiving the transaction request and first verification data set at the NFC shop equipment and forwarding same for processing;
receiving the transaction request and first verification data set and processing same together with a second verification data set, at a transaction processing server and database, to verify/validate and initiate or block the requested transaction.

In a broader understanding, the process includes providing, at an encryption modulating processing server, the first and second verification data sets, and sending the first verification data set to the mobile user equipment or to the cloud and the second verification data set to the transaction processing server and database which could also be Cloud based.

In a still broader understanding, the process also comprises inputting an initial set of user data, in particular an image of the user, and a validation/confirmation stamp into the system, at a user data input device, and forwarding the initial user data set to the encryption modulating processing server. After the data input, an initial encrypted set of user data, to be or for forming the first and second verification data sets, is generated from the initial set of user data by way of a random segmentation or partitioning algorithm.

According to a preferred aspect of the invention, the first and second verification data sets are updated periodically at predetermined time intervals by means of repeated application of the random segmentation or partitioning algorithm. It should be noted that the first and second verification data sets can be identical but take different routes, until the comparison steps. On the other hand, it can be data sets which are, to a certain extent, different from each other, so that the comparison step is carried out on predetermined portions of the data set only.

In a further embodiment, the process comprises displaying data related to the first verification data set, in particular for displaying an image of the user, at a display device of the NFC shop equipment.

In a further embodiment, the first and second verification data sets are being commonly processed at subset of the transaction processing server which is implemented within the NFC shop equipment, and a release or block signal is being output in the shop equipment.

Further aspects and advantages of the invention become more apparent from the subsequent explanation of embodiments of the invention in relation to the drawings. Herein,
Fig. 1 is a schematic illustration of an exemplary system architecture,
Fig. 2 is a schematic flow diagram of a corresponding embodiment of the inventive process,
Fig. 3 is a schematic illustration of an initial set-up in an embodiment of the invention, and
Fig. 4 is a schematic illustration of the core image encryption model.

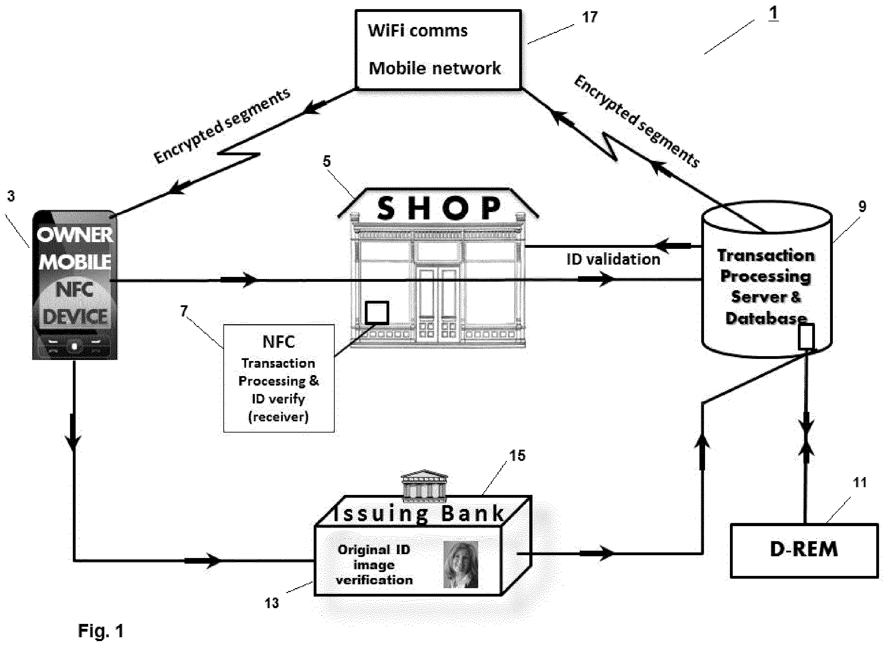

Fig. 1 shows a transaction processing system 1 according to an embodiment of the invention, specifically for verifying and validating retail transactions via an NFC enabled mobile phone 3 at a retail shop 5. In the retail shop 5, an NFC shop equipment 7 is available, which can communicate with the mobile phone 3 through an NFC standard. The system comprises a transaction processing server and database 9 which is connectable to the NFC shop equipment 7 on the one hand and to an encryption modulation processing server 11 on the other. Additionally, in this embodiment, the transaction processing server and database 9 is connectable to a user data input device 13 at a credit card issuing bank 15 and to the mobile phone 3 through a mobile communications network 17.

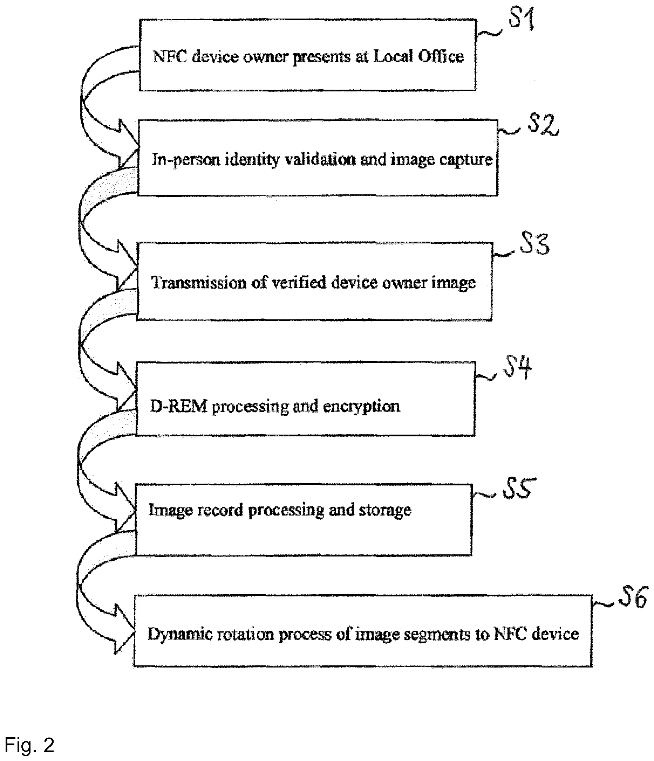

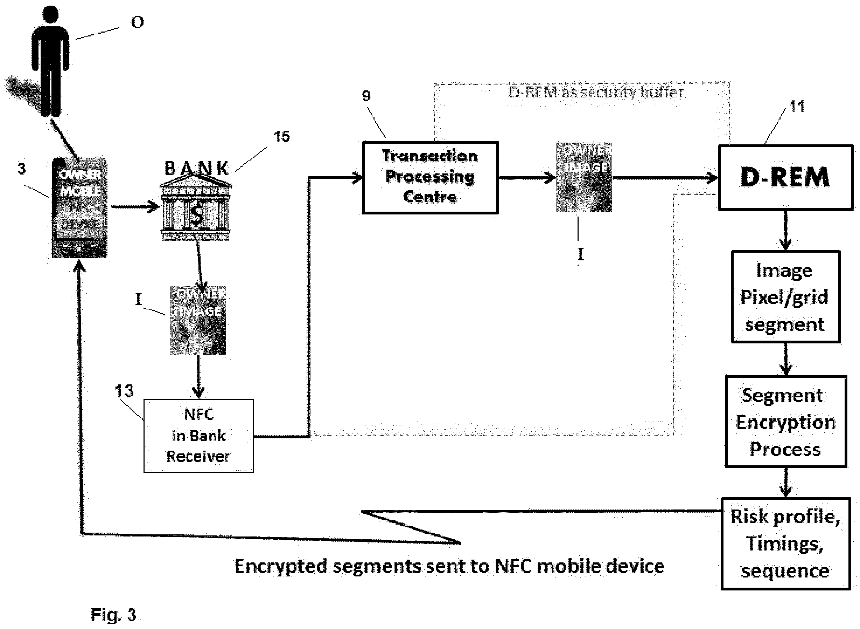

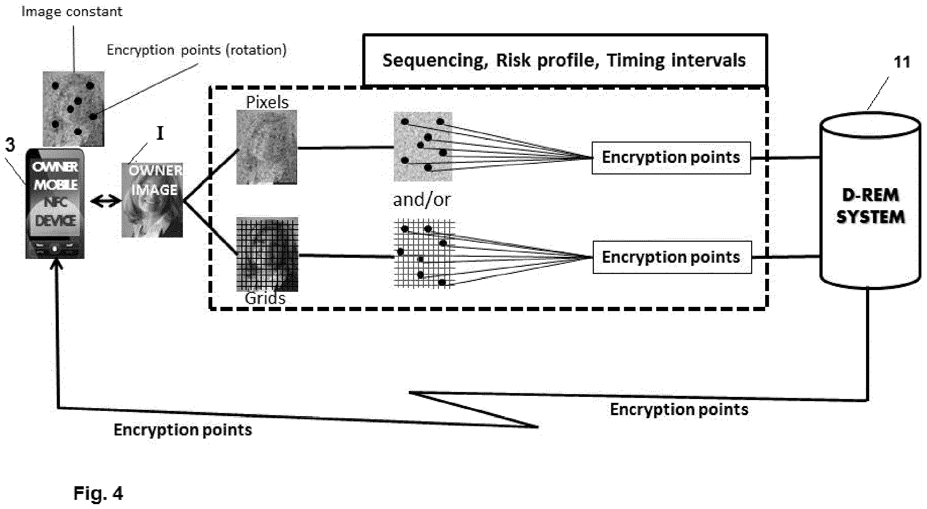

Functions of the system and steps of a corresponding process are now explained referring both to Fig. 1 and Fig. 2, which latter is a flow diagram of core steps of the process. Furthermore, reference is made to Fig. 3, which illustrates the initial stage of the process in more detail, and to Fig. 4, which illustrates the concept of dynamic rotational encrypted modulation (D-REM) in more detail.

At the beginning of the exemplary process, a mobile phone owner O carrying his mobile phone 3 with him/her, goes to the credit card issuing bank 15 to collect a new credit card. The details of the new card will be emulated on the mobile phone 3 or on a separate secure element (not shown) with an existing system (step S1). While at the bank office, the owner O of the mobile phone 3 takes an image I (which could also be a fingerprint) of him/herself in the presence of a bank official, and this image is immediately sent to the NFC enabled user data input device 13 (step S2). It will be used as the basis of the core encryption scheme of the invention, for future identity verification of the mobile phone owner.

In a next step (step S3), the image of the mobile phone owner is transmitted to the transaction processing server and database 9. Herein, means for implementing the D-REM scheme could be an integrated element, or an encryption modulation processing server (as shown with numeral 11 in Fig. 1) can be provided as a stand-alone module. This can be a type of area buffer where identity validation is performed before any other data is passed to the transaction processing server and database proper.

As a next step S4, the image I of the mobile phone owner O is processed by the D-REM software in the encryption modulation processing server 11. At this point, D-REM determines the pixel density of the image, or alternatively, segments the image in another way such as dividing the image into a specific number of image-grids. D-REM then electronically marks or records a predetermined number of image points on the image pixels or image grid, encrypts the location of each marking and then sends the image, with encrypted markings, back to the mobile device owner's device. The entire image is only sent back to the device owner once. Thereafter, only the encrypted points of the image segments are sent and updated to the mobile user device.

Simultaneously, in step S5 a processing record is created for that image, whereby a new set of image markings can be selected from the image stored at the transaction processing server and updated to the NFC mobile device automatically based upon user risk criteria.

In continuous operation of the system, a dynamic encryption modulation scheme is run, illustrated in Fig. 2 as step S6 and in more detail in Fig. 4. At a predetermined time interval (e.g every 5 minutes, once per day, once per month), based on the risk-profile of the mobile phone 3 owner, the newly encrypted segment of the image is updated to the mobile device during which time the D-REM system will verify that the existing encrypted segments of the image on the mobile device are valid and if so, will replace those encrypted segments with the newly encrypted segments. By doing this, the D-REM system ensures that identity verification information on the owner's mobile phone 3 is dynamically rotated with a new set of encrypted identity points and where this action can be performed continuously at predetermined time intervals. The updating of the encrypted identity points takes place without any physical interaction required from the user of the NFC enabled mobile device.

Note that after the initial entry of user data at the bank office for example, it is one-way transmission of encrypted or other data thereafter, i.e. only from transaction processing/D-REM system to NFC enabled mobile device, thereby eliminating the possibility of electronic infection being sent from mobile device to the transaction processing server.

Furthermore, it should be mentioned that there will be an immediate alert at the retail location when ID verification/validation failure is detected.

Whereas the above explanations have been given in an exemplary retail environment, the inventive scheme can also be applied to secure identity documents such as ID cards or passports.

## Claims

1. Transaction processing system for carrying out a verified/validated communications transaction, in particular financial transactions and/or elements of a financial transaction, the system comprising;
• an NFC enabled mobile user equipment (3) for sending to NFC shop equipment (7), a transaction request and a first verification data set comprised of dynamically modulated encrypted user data;
• an NFC shop equipment (7) which can communicate with the NFC enabled mobile user equipment (3) for receiving the transaction request and the first verification data set from the NFC enabled mobile user equipment (3) and forwarding both for processing to a transaction processing server and database (9);
• an encryption modulation processing server (11) for receiving a mobile device owner image and for processing the mobile device owner image by dynamic rotational encrypted modulation (D-REM)"; wherein D-REM is used to apply a predetermined or random segmentation of data pixels or image grids of the mobile device owner image, whereby a selection of data pixels or image grids is continuously modified at specified time intervals and resent in encrypted form to the NFC enabled mobile user equipment (3) as the first verification data set and to a transaction processing server and database (9) which could also be Cloud based as the second verification data set both being said dynamically modulated encrypted user data;
• the transaction processing server and database (9) which are connectable:
to the credit card issuing bank (15) or service provider for receiving the mobile device owner image which was verified in person by the service provider or credit card issuing bank,
to the NFC shop equipment (7) for receiving the transaction request and the first verification data set; and
to the data encryption modulation processing server (11) for receiving the second verification data set and for sending the mobile device owner image,
wherein the transaction processing server and database (9) process the first and second verification data sets to verify/validate and initiate or block the requested transaction, respectively.
and
• the credit card issuing bank (15).

2. System of claim 1, comprising
a user data input device (13) which is connectable to the data encryption modulation processing server (11), for inputting an initial set of user identification data of the NFC enabled mobile user equipment (3) and a validation/confirmation stamp into the system and for forwarding the initial user data set to the data encryption modulation processing server (11).

3. System of claim 2, wherein the data encryption modulation processing server (11) is adapted for forming an initial encrypted set of user data from the initial set of user data provided by the NFC enabled mobile user equipment (3) to the user data input device (13), to be or for forming the first and second verification data sets, by way of the random segmentation algorithm.

4. System of one of the preceding claims, wherein the first and second verification data sets are comprised of dynamically modulated encrypted user data , in particular of the users face and/or fingerprint.

5. System of one of the preceding claims, wherein the NFC shop equipment (7) comprises a display device for displaying data related to the first verification data set.

6. System of claim 5, wherein the data related to the first verification data set displayed involves the mobile device owner image being an image of the user and/or a user fingerprint.

7. System of one of claims 2 or 3, wherein the user data input device (13) is an NFC enabled device which can communicate with the NFC enabled mobile user equipment (3), for receiving user data, in particular the mobile device owners image being an image of the user and/or a user's fingerprint, provided at the NFC enabled mobile user equipment (3).

8. System of one of the preceding claims, wherein the NFC enabled mobile user equipment (3) comprises a secure element on which the first verification data set is stored, or the NFC enabled mobile user equipment (3) comprises means for obtaining the first verification data set from the Cloud.

9. System of one of the preceding claims, wherein part of the transaction processing server is implemented within the NFC shop equipment (7), for processing the first and second verification data sets and outputting an initiate or block signal in the shop equipment.

10. Process for carrying out a verified/validated communications transaction, in particular financial transactions and/or elements of financial transactions, the process comprising of
• inputting at a user data input device (13) an initial set of user data, that was provided to a credit card issuing bank (15) or service provider and verified in person by the credit card issuing bank or service provider, the initial set of user data consisting in a mobile device owner image
• forwarding the initial user data set to a data encryption modulation processing server (11);
• processing at the data encryption modulation processing server (11), the initial user data set by dynamic rotational encrypted modulation (D-REM); wherein D-REM is used to apply a predetermined or random segmentation of data pixels or image grids of the mobile device owner image, whereby a selection of data pixels or image grids is continuously modified at specified time intervals and sent in encrypted form to the mobile user equipment (3) as the first verification data set and to a transaction processing server and database (9) which could also be Cloud based as the second verification data set both being said dynamically modulated encrypted user data;
• sending from an NFC enabled mobile user equipment (3) to an NFC shop equipment (7), a transaction request and the first verification data set;
• receiving the transaction request and first verification data set at the NFC shop equipment (7) and forwarding both for processing to the transaction processing server and database (9);
• receiving the transaction request and first verification data set and processing same together with the second verification data set, at the transaction processing server and database (9), to verify/validate and initiate, or block the requested transaction.

11. Process of claim 10, wherein a new first data verification data set is transmitted to the mobile user equipment (3) only after successful validation of the existing first verification data set.

12. Process of one of claims 10 to 11, comprising
displaying data related to the first verification data set, in particular for displaying an image of the user, at a display device of the NFC shop equipment (7).

13. Process of one of claims 10 to 12, wherein the first and second verification data sets are being commonly processed within a subsystem of the transaction processing server which is implemented within the NFC shop equipment (7), and a release or block signal is being output in the shop equipment.

## Patentansprüche

1. Transaktionsverarbeitungssystem zur Durchführung einer verifizierten/validierten Kommunikationstransaktion, insbesondere von Finanztransaktionen und/oder Elementen einer Finanztransaktion, wobei das System Folgendes umfasst:
• ein NFC-fähiges mobiles Benutzergerät (3) zum Senden einer Transaktionsanforderung und eines ersten Verifizierungsdatensatzes an das NFC-Shopgerät (7),
bestehend aus dynamisch modulierten verschlüsselten Benutzerdaten;
• ein NFC-Shop-Gerät (7), das mit dem NFC-fähigen mobilen Benutzergerät (3) kommunizieren kann, um die Transaktionsanforderung und den ersten Verifizierungsdatensatz vom NFC-fähigen mobilen Benutzergerät (3) zu empfangen und
beide zur Verarbeitung an eine Transaktionsverarbeitung weiterzuleiten Server und Datenbank (9);
• einen Verschlüsselungsmodulationsverarbeitungsserver (11) zum Empfangen eines Bildes
des Besitzers eines Mobilgeräts
und zum Verarbeiten des Bildes des Besitzers des mobilen Geräts durch dynamische Rotationsverschlüsselungsmodulation (D-REM); wobei D-REM verwendet wird, um eine vorgegebene oder zufällige Segmentierung von Datenpixeln oder Bildgittern des Bildes des Besitzers des mobilen Geräts anzuwenden,
wobei eine Auswahl von Datenpixeln oder Bildgittern kontinuierlich in festgelegten Zeitintervallen geändert und in verschlüsselter Form erneut an das NFC-fähige mobile Benutzergerät (3) als erster Verifizierungsdatensatz und an einen Transaktionsverarbeitungsserver und eine Datenbank (9) gesendet wird, die dies tun könnten auch Cloud-basiert sein, da der zweite Verifizierungsdatensatz beide dynamisch modulierte, verschlüsselte Benutzerdaten sind;
• der Transaktionsverarbeitungsserver und die Datenbank (9), die verbindbar sind:
an die kreditkartenausgebende Bank (15) oder den Dienstanbieter, um das Bild des Besitzers des Mobilgeräts zu erhalten, das persönlich vom Dienstanbieter oder der kreditkartenausgebenden Bank überprüft wurde,
an die NFC-Shop-Ausrüstung (7) zum Empfang der Transaktionsanforderung und des ersten Verifizierungsdatensatzes; Und
an den Datenverschlüsselungs-Modulationsverarbeitungsserver (11) zum Empfangen des zweiten Verifizierungsdatensatzes und zum Senden des Bildes des Besitzers des Mobilgeräts,
wobei der Transaktionsverarbeitungsserver und die Datenbank (9) den ersten und den zweiten Verifizierungsdatensatz verarbeiten, um die angeforderte Transaktion zu
verifizieren/validieren und einzuleiten bzw. zu blockieren.
und
• die kreditkartenausgebende Bank (15).

2. System nach Anspruch 1, umfassend
ein Benutzerdaten-Eingabegerät (13), das mit dem Datenverschlüsselungs-Modulationsverarbeitungsserver (11) verbindbar ist, um einen anfänglichen Satz von Benutzeridentifikationsdaten des NFC-fähigen mobilen Benutzergeräts (3) und einen Validierungs-/Bestätigungsstempel in das System einzugeben und zum Weiterleiten des anfänglichen Benutzerdatensatzes an den Datenverschlüsselungs-Modulationsverarbeitungsserver (11).

3. System nach Anspruch 2, wobei der Datenverschlüsselungs-Modulationsverarbeitungsserver (11) dazu ausgelegt ist, einen anfänglichen verschlüsselten Satz von Benutzerdaten aus dem anfänglichen Satz von Benutzerdaten zu bilden, der von dem NFC-fähigen mobilen Benutzergerät (3) an das Benutzerdateneingabegerät bereitgestellt wird (13) zur Bildung des ersten und zweiten Verifizierungsdatensatzes mittels des Zufallssegmentierungsalgorithmus.

4. System nach einem der vorhergehenden Ansprüche, wobei der erste und der zweite Verifizierungsdatensatz aus dynamisch modulierten verschlüsselten Benutzerdaten bestehen, insbesondere des Gesichts und/oder Fingerabdrucks des Benutzers.

5. System nach einem der vorhergehenden Ansprüche, wobei die NFC-Shopausrüstung (7) eine Anzeigevorrichtung zum Anzeigen von Daten umfasst, die sich auf den ersten Verifizierungsdatensatz beziehen.

6. System nach Anspruch 5, wobei die Daten, die sich auf den ersten angezeigten Verifizierungsdatensatz beziehen, beinhalten, dass das Bild des Besitzers des Mobilgeräts ein Bild des Benutzers und/oder ein Fingerabdruck des Benutzers ist.

7. System nach einem der Ansprüche 2 oder 3, wobei das Benutzerdateneingabegerät (13) ein NFC-fähiges Gerät ist, das mit dem NFC-fähigen mobilen Benutzergerät (3) kommunizieren kann, um Benutzerdaten, insbesondere das Bild des Besitzers des mobilen Geräts, zu empfangen ein Bild des Benutzers und/oder ein Fingerabdruck eines Benutzers, bereitgestellt auf dem NFC-fähigen mobilen Benutzergerät (3).

8. System nach einem der vorhergehenden Ansprüche, wobei das NFC-fähige mobile Benutzergerät (3) ein sicheres Element umfasst, auf dem der erste Verifizierungsdatensatz gespeichert ist, oder das NFC-fähige mobile Benutzergerät (3) Mittel zum Erhalten der ersten Verifizierungsdaten umfasst aus der Cloud eingestellt.

9. System nach einem der vorhergehenden Ansprüche, wobei ein Teil des Transaktionsverarbeitungsservers in der NFC-Ladenausrüstung (7) implementiert ist, um den ersten und zweiten Verifizierungsdatensatz zu verarbeiten und ein Initiierungs- oder Blockiersignal in der Ladenausrüstung auszugeben.

10. Verfahren zur Durchführung einer verifizierten/validierten Kommunikationstransaktion, insbesondere von Finanztransaktionen und/oder Elementen von Finanztransaktionen, wobei das Verfahren Folgendes umfasst
• Eingeben an einem Benutzerdaten-Eingabegerät (13) eines anfänglichen Satzes von Benutzerdaten, der einer kreditkartenausgebenden Bank (15) oder einem kreditkartenausgebenden Dienstanbieter bereitgestellt und von der kreditkartenausgebenden Bank oder dem kreditkartenausgebenden Dienstanbieter persönlich überprüft wurde, der anfängliche Satz von Benutzerdaten, bestehend aus einem Bild des Besitzers eines Mobilgeräts
• Weiterleiten des anfänglichen Benutzerdatensatzes an einen Datenverschlüsselungs-Modulationsverarbeitungsserver (11);
• Verarbeiten des anfänglichen Benutzerdatensatzes durch dynamische Rotationsverschlüsselungsmodulation (D-REM) auf dem Datenverschlüsselungs-Modulationsverarbeitungsserver (11); wobei D-REM verwendet wird, um eine vorgegebene oder zufällige Segmentierung von Datenpixeln oder Bildgittern des Bildes des Besitzers des mobilen Geräts anzuwenden, wodurch eine Auswahl von Datenpixeln oder Bildgittern in bestimmten Zeitintervallen kontinuierlich geändert wird werden in verschlüsselter Form als erster Verifizierungsdatensatz an das mobile Benutzergerät (3) und als zweiter Verifizierungsdatensatz an einen Transaktionsverarbeitungsserver und eine Datenbank (9) gesendet, die auch cloudbasiert sein könnten. Bei beiden handelt es sich um die dynamisch modulierten, verschlüsselten Benutzerdaten;
• Senden einer Transaktionsanforderung und des ersten Verifizierungsdatensatzes von einem NFC-fähigen mobilen Benutzergerät (3) an ein NFC-Shopgerät (7):
• Empfangen der Transaktionsanforderung und des ersten Verifizierungsdatensatzes an der NFC-Shop-Ausrüstung (7) und Weiterleiten beider zur Verarbeitung an den Transaktionsverarbeitungsserver und die Datenbank (9);
• Empfangen der Transaktionsanforderung und des ersten Verifizierungsdatensatzes und deren Verarbeitung zusammen mit dem zweiten Verifizierungsdatensatz auf dem Transaktionsverarbeitungsserver und in der Datenbank (9), um die angeforderte Transaktion zu verifizieren/validieren und zu initiieren oder zu blockieren.

11. Verfahren nach Anspruch 10, wobei ein neuer erster Datenverifizierungsdatensatz erst nach erfolgreicher Validierung des bestehenden ersten Verifizierungsdatensatzes an das mobile Benutzergerät (3) übertragen wird.

12. Verfahren nach einem der Ansprüche 10 bis 11, umfassend
Anzeigen von Daten im Zusammenhang mit dem ersten Verifizierungsdatensatz, insbesondere zum Anzeigen eines Bildes des Benutzers, auf einem Anzeigegerät der NFC-Shopeinrichtung (7).

13. Verfahren nach einem der Ansprüche 10 bis 12, wobei der erste und der zweite Verifizierungsdatensatz gemeinsam innerhalb eines Subsystems des Transaktionsverarbeitungsservers verarbeitet werden, der innerhalb der NFC-Shop-Ausstattung (7) implementiert ist, und ein Freigabe- oder Sperrsignal ausgegeben wird in der Ladenausstattung.

## Revendications

1. Système de traitement de transactions pour effectuer une transaction de communication vérifiée/validée, en particulier des transactions financières et/ou des éléments d'une transaction financière, le système comprenant;
• un équipement utilisateur mobile compatible NFC (3) pour envoyer à un équipement de boutique NFC (7), une demande de transaction et un premier ensemble de données de vérification composé de données d'utilisateur cryptées et modulées dynamiquement;
• un équipement de boutique NFC (7) qui peut communiquer avec l'équipement d'utilisateur mobile compatible NFC (3) pour recevoir la demande de transaction et le premier ensemble de données de vérification de l'équipement d'utilisateur mobile compatible NFC (3) et transmettre les deux pour traitement à un traitement de transaction serveur et base de données (9);
• un serveur de traitement de modulation de cryptage (11) pour recevoir une image de propriétaire de dispositif mobile et pour traiter l'image de propriétaire de dispositif mobile par modulation cryptée rotationnelle dynamique (D-REM); dans lequel D-REM est utilisé pour appliquer une segmentation prédéterminée ou aléatoire des données pixels ou grilles d'image de l'image du propriétaire de l'appareil mobile,
dans lequel une sélection de pixels de données ou de grilles d'images est modifiée en continu à des intervalles de temps spécifiés et renvoyée sous forme cryptée à l'équipement d'utilisateur mobile compatible NFC (3) en tant que premier ensemble de données de vérification et à un serveur de traitement de transaction et à une base de données (9) qui pourraient être également basé sur le Cloud en tant que deuxième ensemble de données de vérification, les deux étant lesdites données d'utilisateur cryptées modulées dynamiquement;
• le serveur de traitement des transactions et la base de données (9) qui sont connectables :
à la banque émettrice de la carte de crédit (15) ou au fournisseur de services pour recevoir l'image du propriétaire de l'appareil mobile qui a été vérifiée en personne par le fournisseur de services ou la banque émettrice de la carte de crédit,
à l'équipement de boutique NFC (7) pour recevoir la demande de transaction et le premier ensemble de données de vérification; et
au serveur de traitement de modulation de cryptage de données (11) pour recevoir le deuxième ensemble de données de vérification et pour envoyer l'image du propriétaire de l'appareil mobile,
dans lequel le serveur de traitement de transaction et la base de données (9) traitent les premier et deuxième ensembles de données de vérification pour vérifier/valider et initier ou bloquer la transaction demandée, respectivement.
et
• la banque émettrice de la carte de crédit (15).

2. Système selon la revendication 1, comprenant
un dispositif d'entrée de données d'utilisateur (13) qui peut être connecté au serveur de traitement de modulation de cryptage de données (11), pour entrer un ensemble initial de données d'identification d'utilisateur de l'équipement d'utilisateur mobile compatible NFC (3) et un tampon de validation/confirmation dans le système et pour transmettre l'ensemble initial de données d'utilisateur au serveur de traitement de modulation de cryptage de données (11).

3. Système selon la revendication 2, dans lequel le serveur de traitement de modulation de cryptage de données (11) est adapté pour former un ensemble initial crypté de données utilisateur à partir de l'ensemble initial de données utilisateur fourni par l'équipement utilisateur mobile compatible NFC (3) au dispositif d'entrée de données utilisateur. (13), pour être ou pour former les premier et deuxième ensembles de données de vérification, au moyen de l'algorithme de segmentation aléatoire.

4. Système selon l'une des revendications précédentes, dans lequel les premier et deuxième ensembles de données de vérification sont constitués d'utilisateurs cryptés modulés dynamiquement.
données, en particulier du visage et/ou des empreintes digitales des utilisateurs.

5. Système selon l'une des revendications précédentes, dans lequel l'équipement de magasin NFC (7) comprend un dispositif d'affichage pour afficher des données relatives au premier ensemble de données de vérification.

6. Système selon la revendication 5, dans lequel les données relatives au premier ensemble de données de vérification affichées impliquent que l'image du propriétaire du dispositif mobile est une image de l'utilisateur et/ou une empreinte digitale de l'utilisateur.

7. Système selon l'une des revendications 2 ou 3, dans lequel le dispositif d'entrée de données utilisateur (13) est un dispositif compatible NFC qui peut communiquer avec l'équipement utilisateur mobile compatible NFC (3), pour recevoir des données utilisateur, en particulier l'image du propriétaire du dispositif mobile étant une image de l'utilisateur et/ou une empreinte digitale de l'utilisateur, fournie au niveau de l'équipement d'utilisateur mobile compatible NFC (3).

8. Système selon l'une des revendications précédentes, dans lequel l'équipement d'utilisateur mobile compatible NFC (3) comprend un élément sécurisé sur lequel le premier ensemble de données de vérification est stocké, ou l'équipement d'utilisateur mobile compatible NFC (3) comprend des moyens pour obtenir les premières données de vérification, défini depuis le Cloud.

9. Système selon l'une des revendications précédentes, dans lequel une partie du serveur de traitement de transaction est mise en oeuvre dans l'équipement de boutique NFC (7), pour traiter les premier et deuxième ensembles de données de vérification et émettre un signal d'initiation ou de blocage dans l'équipement de boutique.

10. Procédé pour la réalisation d'une opération de communication vérifiée/validée, notamment d'opérations financières et/ou d'éléments d'opérations financières, le procédé comprenant
• entrer dans un dispositif d'entrée de données d'utilisateur (13) un ensemble initial de données d'utilisateur, qui a été fourni à une banque émettrice de carte de crédit (15) ou à un fournisseur de services et vérifié en personne par la banque émettrice de carte de crédit ou le fournisseur de services, l'ensemble initial de données utilisateur consistant en une image du propriétaire de l'appareil mobile
• transmettre l'ensemble initial de données d'utilisateur à un serveur de traitement de modulation de cryptage de données (11);
• traiter au niveau du serveur de traitement de modulation de cryptage de données (11), l'ensemble de données d'utilisateur initial par modulation cryptée rotationnelle dynamique (D-REM) ; dans lequel D-REM est utilisé pour appliquer une segmentation prédéterminée ou aléatoire de pixels de données ou de grilles d'images de l'image du propriétaire du dispositif mobile, une sélection de pixels de données ou de grilles d'images étant modifiée en continu à des intervalles de temps spécifiés et
envoyé sous forme cryptée à l'équipement d'utilisateur mobile (3) en tant que premier ensemble de données de vérification et à un serveur de traitement de transaction et à une base de données (9) qui pourraient également être basés sur le Cloud en tant que deuxième ensemble de données de vérification, les deux étant lesdites données d'utilisateur cryptées modulées dynamiquement;
• envoyer depuis un équipement d'utilisateur mobile compatible NFC (3) vers un équipement de boutique NFC (7), une demande de transaction et le premier ensemble de données de vérification;
• recevoir la demande de transaction et le premier ensemble de données de vérification au niveau de l'équipement de boutique NFC (7) et transmettre les deux pour traitement au serveur de traitement de transaction et à la base de données (9);
• recevoir la demande de transaction et le premier ensemble de données de vérification et les traiter avec le deuxième ensemble de données de vérification, au niveau du serveur de traitement de transaction et de la base de données (9), pour vérifier/valider et initier ou bloquer la transaction demandée.

11. Procédé selon la revendication 10, dans lequel un nouveau premier ensemble de données de vérification de données est transmis à l'équipement d'utilisateur mobile (3) uniquement après une validation réussie du premier ensemble de données de vérification existant.

12. Procédé selon l'une des revendications 10 à 11, comprenant
afficher des données relatives au premier ensemble de données de vérification, en particulier pour afficher une image de l'utilisateur, sur un dispositif d'affichage de l'équipement de boutique NFC (7).

13. Procédé selon l'une des revendications 10 à 12, dans lequel les premier et deuxième ensembles de données de vérification sont traités en commun dans un sous-système du serveur de traitement de transaction qui est mis en oeuvre dans l'équipement de boutique NFC (7), et un signal de libération ou de blocage est émis. dans l'équipement du magasin.
